Europäisches Patentamt

European Patent Office

Office européen des brevets

(11) Veröffentlichungsnummer: **0 213 502**
B1

(12) # EUROPÄISCHE PATENTSCHRIFT

(45) Veröffentlichungstag der Patentschrift:
14.11.90

(21) Anmeldenummer: 86111250.6

(22) Anmeldetag: 14.08.86

(51) Int. Cl.5: **C09K 11/88**, C09K 11/78,
H01J 29/20, H01J 63/04

(54) Leuchtstoff und Verfahren zu seiner Herstellung.

(30) Priorität: 23.08.85 DE 3530180

(43) Veröffentlichungstag der Anmeldung:
11.03.87 Patentblatt 87/11

(45) Bekanntmachung des Hinweises auf die Patenterteilung:
14.11.90 Patentblatt 90/46

(84) Benannte Vertragsstaaten:
DE FR GB IT NL

(56) Entgegenhaltungen:
DE-A- 2 719 611

JOURNAL OF LUMINESCENCE, Band 12/13, 1976,
Amsterdam R.H.ALBERDA UND G. BLASSE
"Luminescence in a new garnet phase with hexovalent
metal ions", Seiten 687-692
ZEITSCHRIFT FUER NATURFORSCHUNG, Teil A,
Band 39a, 1984, Tübingen B.KOENGETER UND S.
KEMMLER-SACK "Photolumineszenz und
Energietransfer in Seltenerd-aktivierten Granat
Gd3 Te2 Li3 O12 , Seiten 490-494.

Die Akte enthält technische Angaben, die nach dem
Eingang der Anmeldung eingereicht wurden und die
nicht in dieser Patentschrift enthalten sind.

(73) Patentinhaber: Nokia Unterhaltungselektronik
(Deutschland) GmbH, Östliche
Karl-Friedrich-Strasse 132, D-7530 Pforzheim(DE)

(72) Erfinder: Viohl, Uwe, Dr., Toblacher Strasse 44,
D-7307 Aichwald 3(DE)
Erfinder: Kemmler-Sack, Sibylle, Prof. Dr.,
Moltkestrasse 10, D-7400 Tübingen(DE)
Erfinder: Otto, Robert, Sindelfinger Strasse 47,
D-7400 Tübingen(DE)

## Beschreibung

Die Erfindung bezieht sich auf einen Leuchtstoff mit einer Granatstruktur und mindestens einem Aktivator und auf ein Verfahren zu seiner Herstellung.

Aus dem Journal of Luminescence 12/13 (1976) 687–692 ist ein derartiger Leuchtstoff bekannt. Als Formel für diesen Leuchtstoff ist angegeben: $Y_3Li_3Te_2O_{12}$. Als Aktivator werden dreiwertiges Europium oder insbesondere Uran- oder Wolframionen eingesetzt. Die Anregung der Leuchtstoffe erfolgt mit ultraviolettem Licht. Es werden keine Angaben zu den Ausgangsstoffen, den Aktivatorkonzentrationen und dem Herstellverfahren gemacht.

Aus der Zeitschrift Naturforscher 39a, Seiten 490 bis 494, ist ein Leuchtstoff bekannt, für den folgende Formel angegeben ist: $Gd_3Te_2Li_3O_{12}$. Als Aktivatoren werden dreiwertiges Europium, Terbium angegeben. Das Tellur kann durch Wolframionen ersetzt werden, wodurch die Lumineszenz stark beeinflußt wird. Die Anregung des Leuchtstoffes erfolgt mit ultraviolettem Licht. Zur Herstellung des Leuchtstoffes wird ein stöchiometrisches Gemisch verrieben, je 30 Minuten bei 500, 600 und 700°C sowie 2 bis 4 mal 8 Stunden bei 850°C an der Luft geglüht und zwischen den Heizphasen erneut fein verrieben.

Der Erfindung liegt die Aufgabe zugrunde, einen Leuchtstoff der eingangs genannten Art anzugeben, der eine hohe Strahlungsausbeute bei Anregung mit Elektronenstrahlen aufweist und eine einstellbare Nachleuchtdauer zeigt. Eine weitere Aufgabe besteht darin, ein Verfahren zur Herstellung dieses Leuchtstoffes anzugeben.

Die Lösung dieser Aufgabe erfolgt mit dem im Anspruch 1 angegebenen Leuchtstoff. Besonders bevorzugte Ausführungsformen dieses Leuchtstoffes sind in den Unteransprüchen 2 bis 4 beschrieben. Ein Verfahren zum Herstellen des Leuchtstoffes ist im Anspruch 5 angegeben. Vorteilhafte Ausgestaltungen des Verfahrens sind in den Unteransprüchen 6 bis 11 enthalten. Der neue Leuchtstoff kann insbesondere in einer Kathodenstrahlröhre als Leuchtschicht auf dem Leuchtschirm verwendet werden.

Der neue Leuchtstoff zeigt eine hohe Lumineszenzintensität im Bereich des roten Lichtes bei einer Anregung mit Elektronenstrahlen, insbesondere Kathodenstrahlen. Durch die Möglichkeit, den Leuchtstoff auch durch ultraviolettes Licht anzuregen, ist während der Fertigung von Kathodenstrahlröhren eine Kontrolle der Leuchtschicht auf dem Leuchtschirm möglich. Die Nachleuchtdauer ist durch eine Änderung der Europium-Konzentration einstellbar.

Die Erfindung wird nun unter Bezugnahme auf eine Figur näher erläutert, die ein Lumineszenzspektrum eines Europium-Leuchtstoffes zeigt.

Der neue Leuchtstoff mit einer Granatstruktur und mindestens einem Aktivator wird durch die folgende allgemeine Formel beschrieben:

$$Gd_xY_yEu_rTb_sTe_2Li_3O_{12}.$$

Dabei sollen folgende Bereiche für die Indizes eingehalten werden:
$0 \leq x, y \leq 3$,
$x + y = 3 - (r + s)$,
$0 \leq r \leq 2, s < r$.

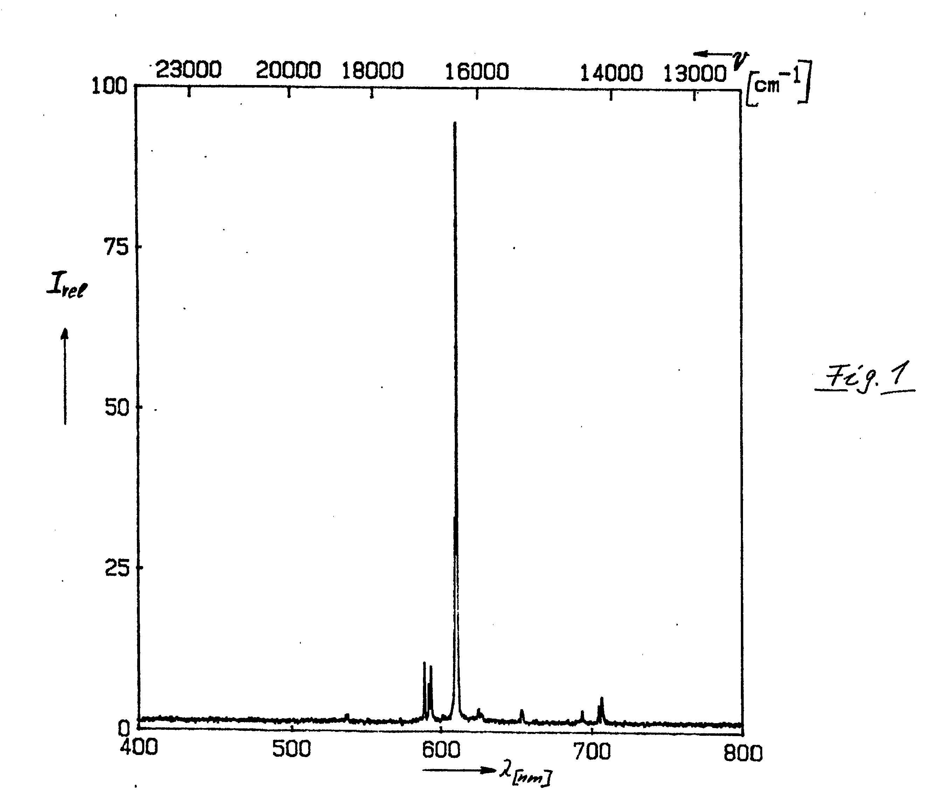

Einen durch Elektronenstrahlen, insbesondere Kathodenstrahlen, anregbaren und dann rot leuchtenden Leuchtstoff erhält man, wenn $y = 0$ ist und das dreiwertige Europium eine Konzentration von $r = 0,0001$ bis $1,0$ vorzugsweise $r = 0,1$ aufweist. Für diesen Leuchtstoff erhält man das in der Figur dargestellte Lumineszenzspektrum, bei dem die relative Lumineszenzintensität $I_{rel}$ über der Wellenlänge 2 aufgetragen ist. Eine Steigerung der relativen Lumineszenzintensität von ungefähr 50% erhält man durch die Zugabe eines Koaktivators in Form von Terbium. Der Koaktivator Terbium soll in einer Menge von 5 bis 50 ppm, vorzugsweise 20 ppm vorhanden sein. Die Nachleuchtdauer, gekennzeichnet durch die Abklingzeit $T_{10\%}$, kann durch Variation des Gehaltes an Europium verändert werden. Für die Konzentration von $r = 0,03$ bis $0,4$ ergeben sich Abklingzeiten $T_{10\%}$ von 10 nsec bis 200 msec.

Einen anderen durch Elektronenstrahlen, insbesondere Kathodenstrahlen, anregbaren rotleuchtenden Leuchtstoff erhält man, wenn $x = 0$ ist und das dreiwertige Europium eine Konzentration von $r = 0,0001$ bis $1,0$, vorzugsweise $r = 0,1$ aufweist. Gegenüber dem erstgenannten Leuchtstoff ohne Koaktivator ergibt sich eine Steigerung der relativen Lumineszenzintensität von ungefähr 9%. Das bei einer Anregung durch Elektronenstrahlen erhaltene Lumineszenzspektrum für diesen Leuchtstoff entspricht dem der Figur. Auch bei diesem Leuchtstoff kann als Koaktivator Terbium eingesetzt werden. Der Koaktivator Terbium soll in einer Menge von 5 bis 50 ppm, vorzugsweise 20 ppm vorhanden sein und es ergibt sich dann eine Steigerung der relativen Lumineszenzintensität von ungefähr 65%.

Nachstehend wird das Verfahren zum Herstellen der Leuchtstoffe beschrieben. Als Ausgangsprodukte werden Oxide, Hydroxide, Nitrate, Oxalate oder Carbonate in stöchiometrischer Mischung verwendet. Bevorzugt werden dabei Oxide und Carbonate. Es können auch Vorprodukte durch Mischfällung als Hydroxide, Oxalate, Citrate oder ähnliche annähernd qualitativ fallende Verbindungen hergestellt werden. Dies wird insbesondere bei Seltenen Erden angewendet.

Die Korngrößenverteilung im Leuchtstoff kann durch Zusetzen von Flußmitteln gesteuert werden. Hierzu können insbesondere Alkali- bzw. Ammoniumsalze in einem Überschuß von 0–50% verwendet werden. Bevorzugt werden dabei LiCl, LiF, NaCl oder NaF. Eine weitere Möglichkeit, die Korngrößenverteilung zu beeinflussen, besteht darin, einen Teil einer beliebigen Komponente der Verbindung nicht als eine der o.g. Verbindungen, sondern zu einem bestimmten Teil von 0–50% als Halogenid einzusetzen. Die beiden genannten Methoden können auch miteinander kombiniert werden.

Der Ansatz aus den Ausgangsprodukten wird in einer Kugelmühle trocken oder naß gemahlen. Die Kugelmühle soll aus $Al_2O_3$, $SiO_2$ oder $ZrO_2$ beste-

hen und ihr Volumen der Ansatzgröße angepaßt sein. Als Mahlflüssigkeit werden unpolare organische Lösungsmittelstoffe verwendet, z.B. Halogenkohlenwasserstoffe, aliphatische oder aromatische Kohlenwasserstoffe. Die Zahl und die Größe der Mahlkörper in der Kugelmühle ebenso wie die Art und Menge der Mahlflüssigkeit orientiert sich an der Ansatzgröße und dem Mahlbechervolumen.

Um eine optimale Voraussetzung für die Entstehung der gewünschten Korngrößenverteilung zu schaffen, wird die Mahldauer an die Ansatzgröße angepaßt und beträgt im Regelfall zwischen 8 und 24 Stunden.

Danach erfolgt ein Glühvorgang in einem Gefäß, dessen Größe nach der Ansatzgröße gewählt ist und das aus $SiO_2$ oder $Al_2O_3$ besteht. Es ist darauf zu achten, daß ein zu großer Temperaturgradient im Ansatz vermieden wird, d.h., zwischen der Mitte und dem Rand des Ansatzes soll kein zu großer Temperaturunterschied bestehen. Der Glühvorgang erfolgt in einer Atmosphäre aus Luft, Sauerstoff oder einer Mischung aus diesen beiden Gasen. Die Temperaturen für den Glühvorgang können nach einem der folgenden Beispiele gewählt werden:

a) 10 bis 15 Stunden Glühen bei 850°C, dann abkühlen,

b) Aufheizen von 500°C auf 850°C innerhalb von 2 bis 3 Stunden, dann 10 bis 15 Stunden Glühen bei 850°C und danach abkühlen,

c) 1,5 bis 2,5 Stunden Glühen bei 600°C, dann Temperaturerhöhung auf 850°C und 5 bis 10 Stunden Glühen bei dieser Temperatur, danach abkühlen.

Zur nachfolgenden Aufarbeitung werden die geglühten Ansätze zerkleinert und in einem von der Größe passenden Mahlbecher mit entsprechender Anzahl Mahlkörper trocken oder naß gemahlen. Der Mahlbecher soll aus $SiO_2$ oder $Al_2O_3$ bestehen. Als Mahlflüssigkeit finden bevorzugt ausreichende Mengen Wasser oder einer leicht sauren wäßrigen Lösung Verwendung. Im Regelfall wird 0,5 bis 1,5 Stunden gemahlen. Die Mahldauer orientiert sich an der gewünschten Korngrößenverteilung. Der so hergestellte Leuchtstoff kann nun nach einem bekannten Verfahren als Leuchtschicht auf den Leuchtschirm einer Kathodenstrahlröhre aufgetragen werden.

Nachstehend werden einige Beispiele für die Ausgangsprodukte und die eingesetzten Mengen angegeben, die nach dem vorstehend beschriebenen Verfahren zur Herstellung des Leuchtstoffes verwendet wurden.

Beispiel 1

1,277 g $Y_2O_3$
0,042 g $YF_3$
0,070 g $Eu_2O_3$
1,277 g $TeO_2$
0,443 g $Li_2CO_3$

Beispiel 2

1,310 g $Y_2O_3$
0,070 g $Eu_2O_3$
1,277 g $TeO_2$
0,399 g $Li_2CO_3$
0,031 g LiF

Beispiel 3

1,219 g $Y_2O_3$
0,211 g $Eu_2O_3$
1,277 g $TeO_2$
0,222 g $Li_2CO_3$
0,156 g LiF

Beispiel 4

0,655 g $Y_2O_3$
0,035 g $Eu_2O_3$
0,638 g $TeO_2$
0,222 g $Li_2CO_3$
0,037 g $NH_4F$

Beispiel 5

1,129 g $Y_2O_3$
0,352 g $Eu_2O_3$
1,277 g $TeO_2$
0,432 g $Li_2CO_3$
0,008 g LiF

Beispiel 6

0,979 g $Gd_2O_3$
0,106 g $Eu_2O_3$
0,638 g $TeO_2$
0,222 g $Li_2CO_3$

Beispiel 7

0,417 g $Gd_2O_3$
0,123 g $Eu_2O_3$
0,319 g $TeO_2$
0,111 g $Li_2CO_3$

Das Lumineszenzspektrum der Beispiele 1 bis 7 entspricht dem der Figur.

**Patentansprüche**

1. Leuchtstoff mit einer Granatstruktur und mindestens einem Aktivator, mit der folgenden allgemeinen Formel:
$Gd_xY_yEu_rTb_sTe_2Li_3O_{12}$,
wobei
$O \leq X, Y \leq 3$,
$X + Y = 3 - (r + s)$,
$O \leq r \leq 2$, $s < r$, ist,
worin das Europium eine Konzentration von $r = 0,0001$ bis $1,0$ hat.

2. Leuchtstoff nach Anspruch 1, dadurch gekennzeichnet, daß das Europium eine Konzentration von $r = 0,1$ hat.

3. Leuchtstoff nach Anspruch 2, dadurch gekennzeichnet, daß Terbium als Koaktivator in einer Menge von 5 bis 50 ppm vorhanden ist.

4. Leuchtstoff nach Anspruch 3, dadurch gekennzeichnet, daß Terbium in einer Menge von 20 ppm vorhanden ist.

5. Verfahren zum Herstellen eines Leuchtstoffes nach einem der Ansprüche 1 bis 4, dadurch gekennzeichnet, daß die Edukte als Hydroxide, Nitrate, Oxalate oder insbesondere Oxide und Carbonate in stöchiometrischer Mischung vorliegen und miteinander vermischt, danach bei einer Heiztemperatur zwischen 800°C und 1100°C für 1 bis 24 Stunden erhitzt und dann durch Mahlen zerkleinert werden.

6. Verfahren nach Anspruch 5, dadurch gekennzeichnet, daß zusätzlich ein Flußmittel in Form von Alkali- bzw. Ammoniumsalzen oder Verbindungen weiterer Komponenten der in Anspruch 1 gekennzeichneten allgemeinen Formel verwendet wird.

7. Verfahren nach Anspruch 6, dadurch gekennzeichnet, daß als Flußmittel $Li_2SO_4$, $NH_4F$, LiF, LiCl, $YF_3$, $GdF_3$, NaCl oder NaF eingesetzt werden.

8. Verfahren nach Anspruch 7, dadurch gekennzeichnet, daß LiF in einer Konzentration von 0% bis 50% verwendet wird.

9. Verfahren nach Anspruch 8, dadurch gekennzeichnet, daß LiF in einer Konzentration von 2,5% verwendet wird.

10. Verfahren nach Anspruch 7, dadurch gekennzeichnet, daß $YF_3$ in einer Konzentration von 0% bis 50% verwendet wird.

11. Verfahren nach Anspruch 10, dadurch gekennzeichnet, daß $YF_3$ in einer Konzentration von 2,5% verwendet wird.

12. Verwendung eines Leuchtstoffes nach einem der Ansprüche 1 bis 4 in einer Kathodenstrahlröhre als Leuchtschicht auf dem Leuchtschirm.

## Claims

1. Luminescent material with a garnet structure and not less than one activator, with the following general formula:
$Gd_xY_yEu_rTb_sTe_2Li_3O_{12}$
with $= O \leq X, Y \leq 3$,
$X + Y = 3 - (r + s)$,
$= O \leq r \leq 2, s < r$
with the Europium having a concentration of $r = 0.0001$ to $1.0$ therein.

2. Luminescent material in accordance with Claim 1, the distinguishing feature being that the Europium has a concentration of $r = 0.1$.

3. Luminescent material in accordance with Claim 2, the distinguishing feature being that Terbium is present as a coactivator in a quantity of 5 to 50 ppm.

4. Luminescent material in accordance with Claim 3, the distinguishing feature being that Terbium is present in a quantity of 20 ppm.

5. Process for producing a luminescent material in accordance with one of the Claims 1 to 4, the distinguishing feature being that the educts are present in a stoichiometric mixture as hydroxides, nitrates, oxalates or particularly oxides and carbonates, and are mixed together, then heated at a heating temperature between 800°C and 1100°C for 1 to 24 hours, and then comminuted by pulverizing.

6. Process in accordance with Claim 5, the distinguishing feature being that additionally a flux is used in the form of alkaline or ammonium salts or compounds with further components from the general formula given in Claim 1.

7. Process in accordance with Claim 6, the distinguishing feature being that the flux used is $Li_2SO_4$, $NH_4F$, LiF, LiCl, $YF_3$, GdF3, NaCl or NaF.

8. Process in accordance with Claim 7, the distinguishing feature being that LiF is used in a concentration of 0% to 50%.

9. Process in accordance with Claim 8, the distinguishing feature being that LiF is used in a concentration of 2.5%.

10. Process in accordance with Claim 7, the distinguishing feature being that $YF_3$ is used in a concentration of 0% to 50%.

11. Process in accordance with Claim 10, the distinguishing feature being that $YF_3$ is used in a concentration of 2.5%.

12. Use of a luminescent material in accordance with one of the Claims 1 to 4 in a cathode ray tube as a luminescent layer on the luminescent screen.

## Revendications

1. Substance fluorescente à structure granulée avec un activateur au minimum ayant la formule générale suivante:
$Gd_xY_yEu_rTb_sTe_2Li_3O_{12}$,
dans laquelle:
$O \leq X, Y \leq 3$,
$X + Y = 3 - (r + s)$,
$O \leq r \leq 2, s < r$,
l'europium ayant une concentration de $r = 0,0001$ à $1,0$.

2. Substance fluorescente selon la revendication 1, caractérisée en ce que l'europium a une concentration de $r = 0,1$.

3. Substance fluorescente selon la revendication 2, caractérisée en ce que le terbium est présent en tant que coactivateur en une quantité de 5 à 50 ppm.

4. Substance fluorescente selon la revendication 3, caractérisée en ce que le terbium est présent en une quantité de 20 ppm.

5. Procédé pour la fabrication d'une substance fluorescente selon l'une des revendications de 1 à 4, caractérisé en ce que les éduits sont présents sous forme d'hydroxydes, de nitrates, d'oxalates ou plus particulièrement sous forme d'oxydes et de carbonates en un mélange stœchiométrique et qu'ils sont mélangés, puis chauffés à une température de chauffage entre 800°C et 1100°C durant 1 à 24 heures pour être ensuite broyés.

6. Procédé selon la revendication 5, caractérisé en ce qu'un fondant est en plus utilisé sous forme de sels alcalins ou d'ammonium ou de composés d'autres composants selon la formule générale mentionnée dans la revendication 1.

7. Procédé selon la revendication 6, caractérisé en ce que du $Li_2SO_4$, $NH_4F$, LiF, LiCl, $YF_3$, $GdF_3$, NaCl ou NaF sont utilisés en tant que fondant.

8. Procédfé selon la revendication 7, caractérisé en ce que le LiF est utilisé en une concentration de 0% à 50%.

9. Procédé selon la revendication 8, caractérisé en ce que le LiF est utilisé en une concentration de 2,5%.

10. Procédé selon la revendication 7, caractérisé en ce que le $YF_3$ est utilisé en une concentration de 0% à 50%.

11. Procédé selon la revendication 10, caractérisé en ce que le $YF_3$ est utilisé en une concentration de 2,5%.

12. Utilisation d'une substance fluorescente selon l'une des revendications de 1 à 4 dans un tube cathodique en tant que couche fluorescente sur l'écran fluorescent.

Fig. 1

EP 0 213 502 B1